# EUROPEAN PATENT APPLICATION

(11) **EP 1 727 079 A2**
(43) Date of publication of application: **29.11.2006**
(21) Application number: 06120365.9
(22) Date of filing: 05.11.1999
(51) Int. Cl.: G06K 19/07, G06K 7/10

(54) **Identifying system for overlapped tags**

(30) Priority: 05.11.1998 JP 31457598
(62) Divisional of application: 99954392.9
(71) Applicant: MITSUBISHI MATERIALS CORPORATION, Chiyoda-ku, Tokyo 100-004 (JP)
(72) Inventor: Uozumi, Gakuji, c/o Mitsubishi Materials Corp., Ohmiya-shi Saitama 330-0835 (JP); Ishihara, Osamu, c/o Mitsubishi Materials Corp., Ohmiya-shi Saitama 330-0835 (JP)
(74) Representative: Gille Hrabal Struck Neidlein Prop Roos

(57) **Abstract**

A system for identifying overlapped tags (11 to 13; 51; 61) comprises an interrogator (85) and a plurality of tags, each tag being appended to an article (1 7) and each having a resonance circuit (24) comprising an antenna coil (14; 54) and connected to the antenna coil a RFID device (16). Each resonance circuit (24) includes a switching element (26; 27; 66) for interrupting the connection between the RFID device (16) and the antenna coil (14; 54) if an electric current beyond a predetermined value flows in the resonance circuit (24). The interrogator (85) oscillates a radio wave from a transceiver antenna (25 a) to tags (11 to 13; 61) and identifies the tags (11 to 13; 61). An oscillation circuit (85i) is able to sweep the radio wave oscillated from the transceiver antenna (25 a) within a predetermined frequency range. The predetermined frequency range being defined so that it includes all of the resonance frequencies of one or more tags (11 to 13; 61), the resonance frequencies change due to the overlapping of one or more tags (11 to 13; 61) and/or one or more metal plates (91).

## Description

The present invention relates to a system for identifying tags which uses RFID (Radio Frequency Identification) technology, in particular to a system comprising the features of the preamble of claim 1.

In detail, the invention relates to a system which can identify each tag, even if appended to two or more articles and even if it overlaps with other tags of the same kind.

Conventionally, a half duplex communication channel is provided between an interrogator and a plurality of tags within the range of the interrogator. Initially, the existence of the tag is not known to the interrogator, but the tag is activated when the interrogator polls a signal having a single frequency, and each tag can de-activate itself (JP-A-8-316888).

In this tag identification system a first broadcast from the interrogator broadcasts a first inquiry message, which contains a first value showing the number of the tags within the range of the interrogator and a first signal used for activating all the tags within a range of the interrogator. Every tag equipped with memory responds to the first reference message, and an identifying display which is not identified by the interrogator is memorized in a memory.

Moreover, the first tag formation means equipped to every tag answers receipt of the first reference message and a calculation which is based on the first value. A random bit for every tag and memorized by an identifying display is performed. When the calculation produces a result to which the predetermined value corresponds, a first set of activated tags is formed by de-activating tags.

After a first de-activating means which identified a first set of activated tags changed the identifying display which shows that the identification is successful with the interrogator. These tags may be de-activated.

Moreover, a second broadcast means carries out the broadcast of a second inquiry message, which contains a second value showing the not identified tags within a range of the interrogator, and a second signal used for activating all the tags within the range of the interrogator a second tag formation means, and the second activating means form a second set of activated tags using the second value instead of the first value, and the number of the identified tags is increased.

Furthermore, broadcast means, the second tag formation means, and the second de-activative means perform the processing using the inquiry message which has a following signal and a following value until identification of all the tags within the range of the interrogator finishes,

in the above-described tag identifying system, the tags are divided into small groups, and by turning OFF the power supply of the tag which does not belong to the group, the identification of the tags of one group is carried out at once so that electric power can be saved.

Each tag puts itself into its group by performing a calculation from a parameter received from this parameter and a parameter which is memorized by itself.

However, in the tag identifying system disclosed in JP-A-8-316888, if two or more tags are overlapped, a mutual inductance may arise between the antenna coils of each tag, and the resonance frequency of the tag may change.

For this reason, even if the interrogator forms the alternative magnetic field in a circumference and thereby oscillates a radio wave (a radio wave on which not overlapped tags resonate) on which the tag resonates from a transceiver antenna of the interrogator, the tag stops resonating and stops supplying electric power of the RFID device of the tag.

Consequently, the interrogator has the disadvantage that the identification of overlapped tags is not possible.

In a known system for interrogating a plurality of tags, the tags comprise an antenna coil connected to an RFID device. Resonance circuits each comprise a switch that can be opened or closed (FR-A- 2 757 952), No means are disclosed to certainly identify overlapping tags or tags overlapping a metal plate.

Tags comprising a resonance circuit with an antenna coil are known (JP-A-10 126 318), wherein an analog switch is interposed in a resonance capacitor.

Furthermore, tags having a fuse integrated in a resonance circuit are known (US-A-4 835 524), Again, no means for identifying overlapped tags or tags overlapping a metal plate is disclosed.

The object of the present invention is to offer a tag identifying system which can carry out the identification of overlapped tags certainly even if two or more tags are overlapped or a tag and a metal plate are overlapped.

Under consideration of this object the invention proposes a system for identifying overlapped each tags appended to articles and each having an antenna coil and a RFID device connected to this antenna coil, the system including the features of independent claim 1.

Preferred improvements and embodiments of this system are subject of the subclaims dependent on claim 1.

The invention is an improvement of tags 11 to 13 each having a RFID device 16 which is appended to an article 1 7 and connected to an antenna coil 14, as shown in Figs, 1, 2 and 5.

In the new system a resonance circuit 24 comprising the antenna coil 14 and the RFID device 16 is equipped with a switch 26, which opens and closes the resonance circuit 24 when in the resonance circuit 24 an electric current flows. A switch controller 28 which opens and closes the switch 26 with predetermined time is connected to the switch 26, and the behaviour of the switch controller 28 depends on the time constant circuit 27 whose time constant is unique to each tag 11 to 13.

If the above-mentioned tags 11 to 13 are independent, these tags have the same resonance frequency, however, if these tags 11 to 13 are overlapped, the resonance frequency changes according to a mutual inductance between of the antenna coils 14 of the tags 11 to 13.

For this reason, if it oscillates a radio wave of the frequency to which an independent tag resonates, the overlapped tags 11 to 13 cannot resonate.

In the identifying system of tags by setting a time constant of a constant circuit 27 of two or more overlapped tags 11 to 13, to be the value which respectively differs, only the switch 26 of the one sheet of tag 11 may close among two or more tags 11 to 13 at a certain moment, and the switches 26 of other tags 1 2 and 13 are open.

Since the mutual inductance does not arise at this time between the one sheet of tag 11 with closed switch 26 and other tags 12 and 13 with opened switch 26, the one sheet of tag 11 with closed switch 26 can resonate by a radio wave and can identify this tag 11.

Thus, all overlapped tags 11 can be identified one by one sequentially for a short time.

The system of the invention, furthermore, comprises a switch controller 28 between the switch 26 and the constant circuit 27, and the switch controller 28 provides the switch 26 in the state of being opened and closed according to the time constant circuit 27 and the state of being opened regardless of a signal of the time constant circuit 27.

If in the identifying system for tags a radio wave of the frequency of which an independent tag resonates (oscillates), the tags 11 to 13 do not resonate, however, minute voltage may occur to each tag 11 to 13.

By the minute voltage, the time constant circuit 27 starts operating, the switch 26 opens and closes with a signal of the time constant circuit 27, a certain one sheet of tag 11 is identified. The switch controller 28 is maintained at the state where the switch 26 of the identified tag 11 opens, regardless of a signal from the time constant circuit 27 after the identification of the tag 11.

Consequently, since the number of not identified tags 1 2 and 13 where the switch 26 opens and closes, decrease gradually, each tag 11 to 13 can be identified certainly.

In addition, the voltage for maintaining at the state where the switch 26 opens is carried out with an electric charge stored in the tags 11 to 13 by resonance.

As shown in Fig. 8, a fuse 66 is provided in the resonance circuit 24 comprising the antenna coil 14 and the RFID element 16, which fuse melts when electric current beyond a predetermined value flows in the resonance circuit 24.

When the identifying system for tags oscillates a radio wave of the frequency to which an independent tag resonates and when the intensity of the radio wave is strengthened gradually, a pair of tags 61, which are at both sides of the overlapped tags, is identified, where the amount of shifts from the resonance frequency of the independent tag is the smallest.

In these tags 61, after identification, the RFID devices 16 pass electric current beyond a predetermined value into the resonance circuits 24, melt the fuses 66, and change into the state where the resonance circuits 24 open.

Following, the pair of the tags 61 is identified, the fuses 66 of these tags 61 are melted and the resonance circuits 24 become to be the state of being opened.

Thus, all the overlapped tags 61 can be identified by identifying sequentially from the outside of the overlapped tags 61, and the resonance circuits 24 of the identified tags 61 become to be the state of being opened compulsorily.

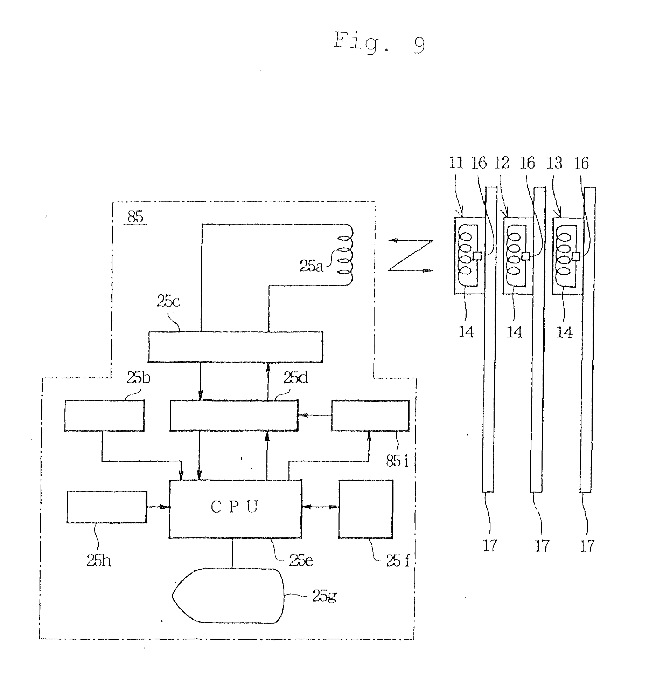

Referring to Fig. 9, an interrogator 85 is prepared with an oscillation circuit 85i in which sweeping the frequency of oscillation is possible so that the radio wave, oscillated from a transceiver antenna 25a by the interrogator 85 which oscillates the radio wave from the above-mentioned transceiver antenna 25a to the tags 11 to 13, has a predetermined frequency range, and the predetermined frequency range is defined a frequency range containing all of the resonance frequency of two or more tags 11 to 13, which, respectively, changes with the overlapping tags 11 to 13, the resonance frequency of the tags 11 to 13 with closed switches or the tags with not melted fuse.

If there is a big number of sheets of tags 11 to 13 to be overlapped, the switches of two or more tags 11 to 13 may close simultaneously every moment (In the case of tags which have a fuse, no fuse of tags is melted just after starting of sweeping the resonance frequency).

In such case, a mutual inductance does not arise among two or more tags 11 to 13 with the above-mentioned closed switches, and the resonance frequency of each tag 11 to 13 changes.

If in the identifying system the frequency of an alternative magnetic field (a radio wave which the interrogator 85 oscillates) which the interrogator 85 forms is changed so that two or more tags 11 to 13 with closed switches or two or more tags with not melted fuses resonate.

Therefore, the frequency of the alternative magnetic field is swiped with the oscillation circuit 85i so that, at least, two or more tags 11 to 13 with closed switches or two or more tags with not melted fuses resonate.

The range of sweeping frequency contains all the values from minimum to maximum, by the oscillation circuit 85i, of the resonance frequency of two or more tags 11 to 13 with closed switches or the two or more tags with not melted fuses so that it is possible to maintain the switches of the identified tags 11 to 13 at the state of being opened one by one or melt the fuses one by one, and all the tags 11 to 13 can be identified.

Referring to Fig, 10, the interrogator 85 is prepared with the oscillation circuit 85i in which sweeping the frequency of oscillation is possible so that a radio wave, oscillated from the transceiver antenna 25a by the interrogator 85 which oscillates a radio wave from the above-mentioned transceiver antenna 25a to tags 11 to 13, has a predetermined frequency range, and the predetermined frequency range is defined a frequency range containing all of the resonance frequencies of one or more tags 11 to 13 which, respectively, change with overlapping one or two or more tags 11 to 13 and one or more metal plates 91.

When one or more tags 11 to 13 and one or more metal plates 91 are overlapped, each tag 11 to 13 has the peculiar resonance frequency depending on the distance with the tag and the metal plate 91 which others overlap, or arrangement, thereby has the resonance frequency different from the resonance frequency which the independent tags 11 to 13 have.

Then, in the identifying system for tags the frequency of the alternative magnetic field (a radio wave which the interrogator 85 oscillates) which the interrogator 85 forms is changed so that all of the overlapped two or more tags 1 1 to 13 may resonate.

That is, the oscillation circuit 851 sweeps the oscillation frequency within the frequency range which contains the maximum and minimum value of resonance frequency of overlapped two or more tags 11 to 13.

By this, two or more tags 11 to 13 of closed switches or the tag of not melted fuses are identified one by one and the switches of the identified tags 11 to 13 are maintained at the state of being opened one by one or the fuses are melted one by one, and all the tags 11 to 13 can be identified.

In the drawings, several embodiments of the system of the present invention are shown, wherein
Fig. 1 is a circuit of a tag of a first embodiment form of the present invention,
Fig. 2 is a circuit showing overlapped articles to which the tags are appended and an interrogator,
Fig. 3 is a sectional view along line A-A of Fig. 4 showing a tag appended to an article,
Fig. 4 is a sectional view along line B-B of Fig. 3,
Fig. 5 is a time chart which shows on-off times of the switch of each tag,
Fig, 6 is a sectional view along line C-C of Fig 7 showing a tag appended to an article of a second embodiment form of the present invention,
Fig. 7 is a sectional view along line D-D of Fig. 6,
Fig. 8 is a circuit showing a third embodiment form of the present invention,
Fig. 9 is a circuit as in Fig. 2 showing a fourth embodiment form of the present invention, and
Fig. 10 is a circuit as in Fig. 2 showing a fifth embodiment form of the present invention.

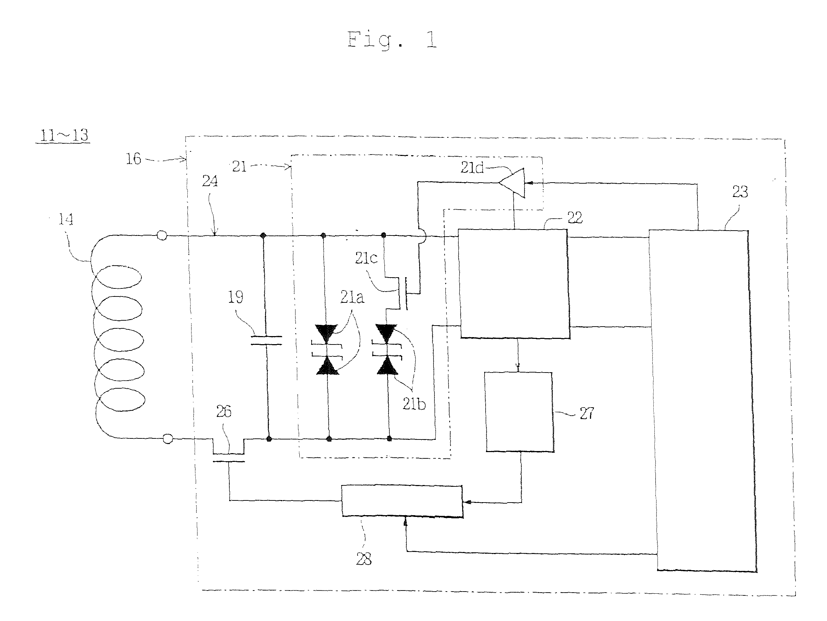

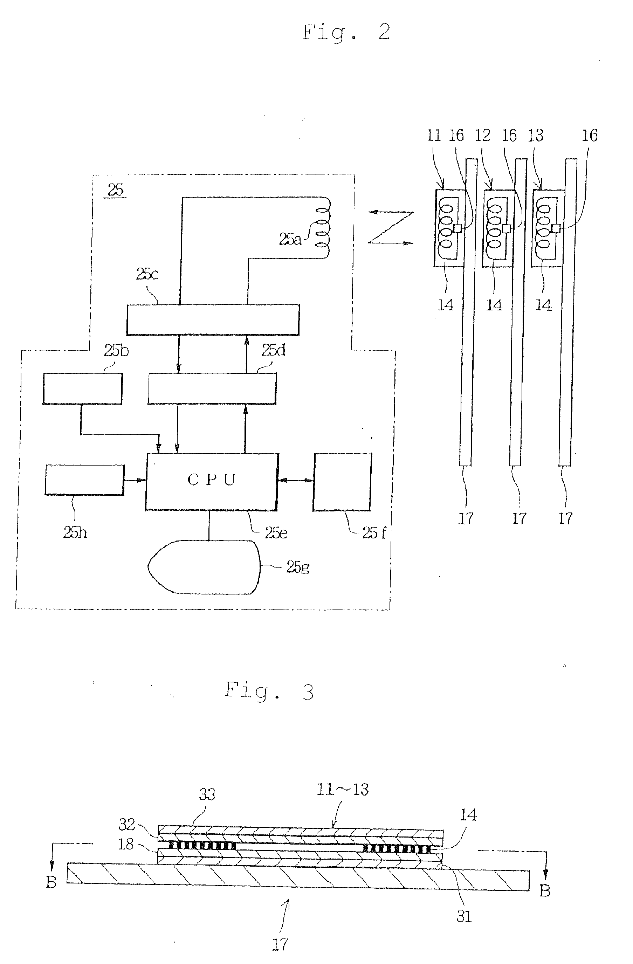

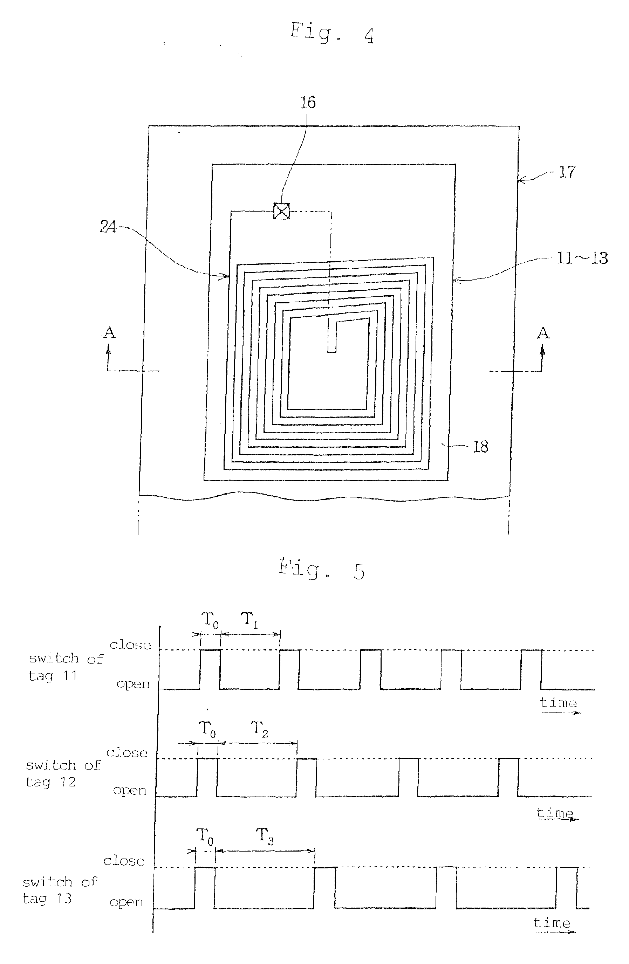

As shown in Fig. 1 und 2, tags 11 to 13 each have an antenna coil 14 and a RFID device 16 connected to the antenna coil 14, Moreover, in this embodiment, the number of tags 11 to 13 is three, and they are appended each to an article 1 7, such articles can be overlapped.

Each tag 11 to 13 comprises a time constant circuit 27 mentioned later.

As shown in Fig. 3 and 4 in detail, the antenna coil 14 is formed with an insulated wire in the shape of a swirl of an abbreviated square, and sticking it on a base board 18, or is formed in the shape of a swirl of an abbreviated square by removing an unnecessary portion by the etching method or the piercing method from the base board 18 laminated conductive material such as aluminum foil and/or copper foil.

The RFID device 16 is stuck on the base board 18 (Fig. 4), and has a capacitor 19, an ASK modulation circuit 21, a voltage regulator 22, and a modulation/demodulation logic part 23 (Fig. 1).

The capacitor 19 is connected in parallel to the antenna coil 14 and comprises the resonance circuit 24 with the antenna coil 14.

In the present embodiment form, the RFID device 16 does not have a battery.

For this reason, when the antenna coil 14 receives a radio wave of specific resonance frequency, a voltage produced by its electric-magnetic inductance is impressed to the capacitor 19.

It comprises so that the voltage impressed to the capacitor 19 is rectified and stabilized by the voltage regulator 22, and is supplied to the modulation/demodulation logic part 23, thereby activating the tags 11-13.

Moreover, a memory (not shown) which memorizes data peculiar to the article is prepared in the modulation/demodulation logic part 23.

The memory comprises so that it is a ROM (read only memory), a RAM (random-access memory), or a non-volatile memory, and while memorized data is read according to a read-out command by data communications with the radio wave from an interrogator 25 (later mentioned) under control of the modulation/demodulation logic part 23, and writing the data may be performed according to a write-in command from the interrogator 25.

Moreover, the ASK modulation circuit 21 is a circuit which modulates the amplitude of voltage and comprises; a pair of first zener diodes 21a connected in parallel to the capacitor 19,
a pair of second zener diodes 21b connected in parallel to the pair of first zener diodes 21a, a switch 21c for modulation connected in series to the pair of second zener diodes 21b, and an operational amplifier 21d which carries out on-off of the switch 21c for the modulation.

A signal from the modulation/demodulation logic part 23 is amplified by an operational amplifier 21d, and on-off of the modulation switch 21c is controlled by an amplified signal.

It comprises so that, if the switch 21c for modulation turns on, the voltage supplied to the antenna coil 14 is restricted to predetermined value (for example, 3V), and when the switch 21c for the modulation turns off, the voltage supplied to the antenna coil 14 is restricted to predetermined value (for example, 9V).

In addition, a PSK modulation circuit (frequency modulation) or a FSK modulation circuit (phase modulation) may be used instead of the ASK modulation circuit 21.

The characteristic composition of the present embodiment form comprises so that
the normally closed switch 26 which opens and closes the resonance circuit 24 when current flows in the resonance circuit 24, is equipped in the above-mentioned resonance circuit 24,
the time constant circuit 27 which opens and closes the switch 26 for every predetermined time is connected to the switch 26, and an opening time of the switch 26 determined by the time constant circuit 27 may change with each tag 11-13 (Fig. 1).

The above-mentioned switch 26 is a normally closed field effect transistor (FET) which closes when the voltage is not impressed, and opens when predetermined voltage is impressed.

The time constant circuit 27 comprises with the direct-current voltage from the above-mentioned voltage regulator 22 to repeat that it opens the switch 26 during predetermined time period by impressing a predetermined voltage after closing the switch 26 during a predetermined time period by impressing voltage to the switch 26.

The time constant circuit 27 of each tag 11-13 has a peculiar constant, respectively.

For example, as shown in Fig. 5, the time period which has closed each switch 26 of the three sheets of tags 11-13 is identically set up with T0, respectively, and the time period which is opening the switch 26 is set as the value which differs from T1, T2, and T3, respectively.

In addition, the time T0 is the time period in which the interrogator 25 can read and can write the tags 11-13.

Moreover, a switch controller 28 comprises so that it is equipped between the switch 26 and the time constant circuit 27,
and is changed into the one state (hereinafter a time-constant-circuit dependence state) where the switch 26 opens and closes with a signal (voltage) of a time constant circuit 27,
or the other state (hereinafter a switch normally opening state) where the switch opens regardless of a signal (voltage) of a time constant circuit 27.

The switch controller 28 can change the switch 26 into the above-mentioned time-constant-circuit dependence state, and into the switch normally open state with a signal from the modulation/demodulation logic part 23.

As the article 17, for example, an envelope of a cash registered mail, in which only a bill (not shown) is enclosed.

In this case, the data, an amount of money of the cash enclosed in the envelope, a post office name which relayed conveyance of the envelope and a carrier name, or date and time of arriving or leaving of the envelope and so on, are memorized in the RFID device 16.

In addition, a mark 31 of Fig. 3 is a first adhesives layer for sticking the base board 18 on the surface of the article 17, a mark 33 is a cover layer which covers the antenna coil 14 and the RFID device 16 on the above-mentioned base board 18 and, further, a mark 32 is a second adhesives layer for sticking the cover layer 33 on the base board 18.

On the other hand, the interrogator 25 is a RFID controller and has the transceiver antenna 25a, a power-supply circuit 25b, a Radio-Frequency (RF) circuit 25c, and a modulation/demodulation 25d (figure 2).

Moreover, a memory 25f, a display 25g and an input means 25h are connected to a CPU 25e of the interrogator 25.

In addition, with the present embodiment form, although three sheets of tags are overlapped with the articles, two or not less than four sheets of tags can be overlapped with the articles.

Moreover, although the RFID device which does not have a battery with the present embodiment form, the RFID device which has the battery of a solar cell or other batteries is available.

Thus, an example of the comprised identifying system of the tag is explained.

In the example, the articles 17 are three envelopes of the cash registered mail with which the bill is enclosed, and the tags 11-13 are stuck on these articles 17, respectively.

The data (the amount of money of the cash enclosed with the envelopes, the post office name which relayed conveyance of the envelopes and a carrier name, or date and time of arriving or leaving of the envelopes and so on) peculiar to the articles are memorized by the memories of the RFID devices 16 of tags 11-13.

In the state where the overlapped three envelopes 17 which the stuck tags 11-13, respectively, i.e., the state where the three envelopes 17 are made into the bunch, since the switch 26 of each tag 11-13 closes, a mutual inductance may arise between the antenna coil 14 of each tag 11-13, and the resonance frequency of each tag 11-13 may change if the radio wave of a predetermined frequency is oscillated from the interrogator 25.

That is, the self-inductance of each tag 11-13 increases by mutual inductance of each tag 11-13.

However, the time constant circuit 27 operates with the voltage, and the switch 26 opens and closes with a signal of the time constant circuit 27, since the minute voltage occurs to each tag 11-13 even if each tag 11-13 does not resonate.

Moreover, since the time constants of the time constant circuits 27 of the three sheets of overlapped tags 11-13 are respectively set in deferent values, only the switch 26 of the one sheet of tag 11 is likely to be closed among the three sheets tags 11-13 at a certain moment, while the switches 26 of other tags 12 and 13 is opened.

Since, between the one sheet of tag 11 with the closed switch 26 and other tags 12 and 13 with the opened switch 26, the mutual inductance does not arise, the tag 11 with the closed switch 26 resonates by the above-mentioned radio wave.

On the other hand, the radio wave oscillated from the above-mentioned interrogator 25 is a digital signal formed into two values.

The digital signal is emitted from a signal generator (not shown) of the interrogator 25, is put on the subcarrier of a predetermined frequency by the modulation/demodulation 25d, thereby modulated.

In the Radio Frequency (RF) circuit 25c, a modulated signal is amplified and it oscillates from the transceiver antenna 25a.

The ASK (amplitude modulation), the FSK (frequency modulation) or the PSK (phase modulation) is available to the above-mentioned modulation, for example.

The interrogator 25 reads the peculiar information from the memory of the RFID device 16 of the above-mentioned predetermined resonated tag 11.

Therefore, the voltage produced by an electric-magnetic induction is impressed to the capacitor 19 by resonance of the above-mentioned predetermined tag 11, and the voltage regulator 22 rectifies and stabilizes the voltage.

At the same time it supplies the voltage to the modulation/demodulation logic part 23 and activates the RFID device 16.

In the modulation/demodulation logic part 23, only the signal required for demodulation is taken in, the question signal is made to reproduce from an original digital signal and the data of the envelope 17 including the enclosure amount of money peculiar to an envelope 17 is oscillated to the interrogator 25 from a memory.

The oscillation of the data of the enclosure amount of money is performed by amplifying and modulating for the ASK modulation in the circuit 21 of the RFID device 16, and oscillating from the antenna coil 14 is formed.

Following, with the interrogator 25 which received the data, the peculiar information on the concerned envelope 17 can be checked with a display 25g.

When writing predetermined data in the memory of the RFID device 16 of the tag 11 here, it writes in from a 25h of the input means, the data (such as for example, the date, time and a post office name, when/where a check is performed i.e., the date, time and a post office name, etc when/where the contents about an envelope is read from the tag), are inputted, and it oscillates to the tag 11.

The data of the write-in matter are written in the memory of the RFID device 16.

After the writing to the memory of the RFID device 16 of the predetermined tag 11 is completed, a signal is sent to the switch controller 28 from the modulation / demodulation logic part 23 of the tag 11, and regardless of a signal from the time constant circuit 27, it maintains the state (switch normally opened state) where the switch 26 of the above-mentioned identified tag 11 opens, thereby maintains the state where the resonance circuit 24 of the tag 11 to be opened.

Impressing a predetermined voltage to the switch 26 can be continued until all the overlapped tags 11-13 are identified.

The voltage, for maintaining at the state where the switch 26 opens, is generated by the electric charge stored in the capacitor 19 by resonance.

Moreover, at a certain moment, among the remaining two sheets of tags 12 and 13, only the switch 26 of one sheet of tag 12 may close and the switch 26 of the other tag 13 may open.

At this time, after identifying the tag 12 of the closed and resonated switch 26 like the above mentioned, the state where the resonance circuit 24 opened, is maintained.

And the state where the resonance circuit 24 is opened, is maintained, after identifying the tag 13 like the above mentioned, when the switch 26 of the tag 13 which remained at the end closes.

Thus, all the overlapped tags 11-13 can be identified one by one serially for a short time.

Moreover, as mentioned above, since the un-identified tags 11-13 whose switches 26 open and close cyclically, decrease gradually, identifying each overlapped tag 11-13 can be still certain.

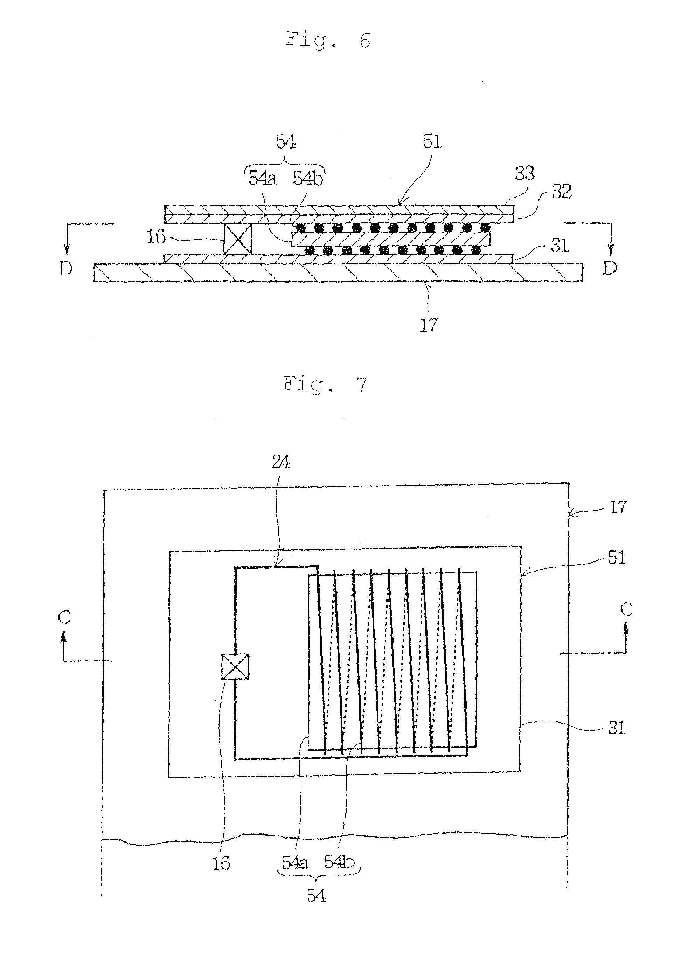

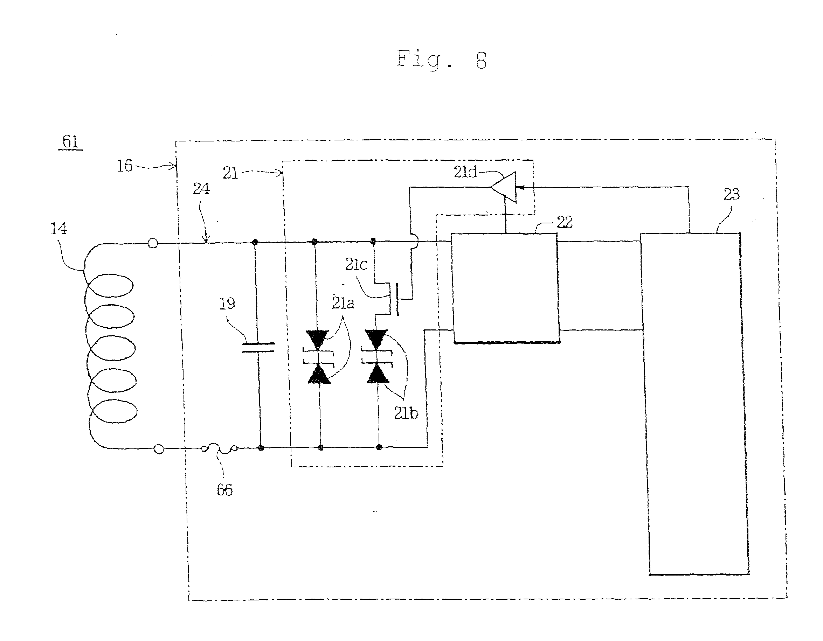

Figs. 6 and 7 show a second embodiment form of the present invention.

In Figs. 6 and 7, the same marks as in Figs. 3 and 4 show the same parts.

With the present embodiment form, an antenna coil 54 has a magnetic material 54a used as a magnetic core, and main part of a coil 54b wound around the magnetic material 54a.

As for the form of the magnetic material 54a, a plate, a cylinder, a solid prism and a cylinder, etc. may be used.

The hollow cylinder may be one in which the cylinder is formed by assembling a plurality of arc-shaped pieces, or one in which the cylinder is formed by a thin film or foil.

Moreover, as the magnetic material 54a, it is recommended comprising;
(1) a laminating object having a plurality of thin films or thin boards of a soft magnetic metal and a plurality of insulating thin films or thin boards alternatively overlapped, or a laminating object in which a plurality of thin films or thin boards of the soft magnetic metal are overlapped such that the surface thereof are insulated,
(2) a compound material of a powder or flakes of the soft magnetic metal and a plastic, a compound material of the powder or flakes of the soft magnetic metal, the powder of a ferrite, and a plastic,
(3) a compound material of the powder of a soft magnetic metal or flakes, the powder of a ferrite, and a plastic,
(4) a compound material of the powder of a ferrite, and a plastic and
(5) a sintered ferrite etc.

In the above-mentioned (1) - (5), when it is required that magnetic permeability does not change with surrounding temperature and the antenna coil comprises a resonance circuit whose resonance frequency does not change, it is preferable to use the soft magnetic metal as magnetic material, and the form of magnetic material is preferable to be a thin film, powder, or flakes so that an eddy current is not produced and the resonance characteristic is not reduced, when resonance frequency is high.

In the above-mentioned (1), it is preferable to use a film made of iron base amorphous, cobalt base amorphous, a permalloy or the silicon steel, with a thickness of 5-250 micrometers, as the soft magnetic metal thin film, and it is preferable to use the insulating resin film made of a polyester film, a poly vinylidene chloride, a poly vinyl chloride or a polyethylene terephthalates (PET), with a thickness of 5-50 micrometers, as an insulating thin film.

Moreover, an insulated paper is sufficient as the insulating thin film.

It is preferable to use a carbonyl iron powder or a reduced-iron powder whose diameter is 0.1-30 micrometers, as the soft magnetic metal powder of the above (2) or (3).

Furthermore, after the soft magnetic metal flakes made of an iron, the permalloy, an amorphous alloy, etc. are divided by the atomize method and are fabricated to the soft magnetic metal powder, it is preferable to use the flakes obtained by mechanically shaping the soft magnetic metal powder to be flat with a thickness of 0.1-10 micrometers.

It comprises identically to the first embodiment form except the above.

Thus, unlike the tag of the first embodiment form, the tag 51 is comprised to have the feature that the mutual inductance with other tag 51 or the metal plate is small, when it is overlapped on other tag 51 or the metal plate.

Since the identifying system of the overlapped tag is the same with that of the first embodiment form, the explanation is omitted.

The Fig. 8 shows a third embodiment form of the present invention.

In Fig. 8, the same marks as Fig. 1 show the same parts.

In the present embodiment form, it comprises so that it does not have the switch, the time constant circuit, and the switch controller of the first embodiment form, but a fuse 66 is equipped in the resonance circuit 24 comprising the antenna coil 14 and the RFID device 16, and when current beyond predetermined value flows in the resonance circuit 24, the fuse 66 melt down.

Moreover, the interrogator (not shown) comprises to be able to change strengthening and weakening gradually the intensity of the radio wave which is oscillated toward the overlapped tag 61.

It comprises identically to the first embodiment form except the above.

Thus, in the comprised identifying system of the tag, it oscillates the radio wave on which the independent tag resonates toward two or more overlapped tags 61, the intensity of the radio wave is strengthened gradually, and the magnetic field intensity is enlarged gradually.

On the other hand, the pair of the outside of overlapped tags 61 have the smallest amount of shifts from the resonance frequency of the independent tag among the overlapped tags 61.

For this reason, if the above-mentioned magnetic field intensity becomes large beyond predetermined value, since the electromotive force of the antenna coil 14 of the pair of the outside of the tags 61 become more than the operation voltage of the RFID device 16 of the tags 61, the RFID device 16 of the tags 61 is activated, and it operates, and communicates with the interrogator, namely, the interrogator performs reading and the writing of the tags 61.

Since the RFID device 16 passes large current by itself in the resonance circuit 24 and melts down a fuse 66, after completing the communication with the interrogator, therefore the resonance circuit 24 is opened, and even if an interrogator oscillates the radio wave, the overlapped tags 61 do not resonate.

When the signal from the pair of the above-identified tags 61 stops, magnetic field intensity is reduced and the interrogator enlarges magnetic field intensity gradually by strengthening intensity of the radio wave oscillated again after that.

On the other hand, since the resonance circuit 24 of the pair of the above-mentioned tags 61 have already been opened, the amount of shifts of the resonance frequency with the pair the tags 61 which respectively adjoin the pair of the above-mentioned tags 61 where the conununication stopped from the independent tag, become the smallest.

If the above-mentioned magnetic field intensity becomes large beyond predetermined value, since the guidance electromotive force of the antenna coils 14 of the tags 61 may become more than the operating voltage of the RFID devices 16, the RFID devices 16 pass large current by themselves in the resonance circuit 24, and melt the fuses 66, after the RFID devices 16 of the above-mentioned tags 61 operate communicating with the interrogator and complete the communication.

All the tags 61 can be identified by repeating the above-mentioned procedure.

Thus, all the overlapped tags 61 can be identified sequentially from the outside tags 61 to inside tags 61 among the overlapped tags 61 with the procedure which the resonance circuits 24 of the identified tags 61 are opened compulsorily.

Fig. 9 shows a forth embodiment form of the present invention.

In Fig. 9, the same marks as Fig. 2 shows the same parts.

In the present embodiment form, the radio wave oscillated from the transceiver antenna 25a by the interrogator 85 which oscillates the radio wave from the transceiver antenna 25a to the tags 11-13, and identifies the tags 11-13 equipped with an oscillation circuit 85i in which a sweep is possible, within a range of a predetermined frequency.

A predetermined frequency range is defined that a frequency range contains all of the resonance frequency of the tags 11-13, which is respectively changed by overlapping the tags 11-13, or whose switches have closed.

It comprises identically to the first embodiment form except the above.

In addition, in the present embodiment form, although the tag equipped with the switch is recommended, the tag with the fuse shown in the third embodiment form is also available.

In this case, it comprises so that the above-mentioned predetermined frequency range is a frequency range containing all of the resonance frequency, which respectively changes by overlapping the tags, of the tags whose fuses are not melting, and after the identification of the tags, the fuses of the tags is melted down.

If there is very much number of sheets of the tags 11-13 to be overlapped, the switches of two or more tags 11-13 may close simultaneously every moment.

In such a case, the mutual guidance action is produced among two or more tags 11-13 in which the switches close, and the resonance frequency of each tag 11-13 changes.

Then, the frequency of the police-box magnetic field (a subcarrier which carries a question signal) which the interrogator 85 forms is changed so that two or more tags 11-13 in which the switches closes simultaneously at least may resonate.

Therefore, the oscillation circuit 85i sweeps the oscillation frequency from minimum to maximum in a range of the resonance frequency which contains all of the value of the resonance frequency of two or more tags 11-13 in which the switches close simultaneously.

The radio wave is received by the antenna coil 14 of the tag 11 which has the resonance frequency which resonates in a predetermined frequency.

If the predetermined tag 11 receives as mentioned above, the interrogator 85 suspends the sweeping of frequency, and it reads information peculiar to the tag 11, writes predetermined information in the tag 11, and further, may maintain the tag 11 at the state (normally opening state of the switch) where the switch of this tag 11 is opened.

Then, the interrogator 85 resumes the above-mentioned suspended sweeping, of the frequency.

That is, the radio wave is received by the antenna coil 14 of the tag 12 which has another predetermined resonance frequency, by changing the frequency of a radio wave (the carrier which carries the interrogation signal) oscillated from the transceiver antenna 25a of the interrogator 85 by the oscillation circuit.

And when the tag 12 resonates by other radio wave of the above predetermined frequency, the interrogator 85 suspends the sweeping of frequency again, it reads the data from the tag 12 like the above, writes a predetermined information in the tag 12, and further maintains the tag 11 at the state where the switch of the tag 12 is opened.

Thus, two or more tags 11-13 with closed switches can be identified one by one, and all the tags 11-13 can be identified by maintaining at the state where the switches of the identified tags 11-13 are opened one by one.

Since the operation except the above is the same in abbreviation as that of the first embodiment form, the explanation of a repetition is omitted.

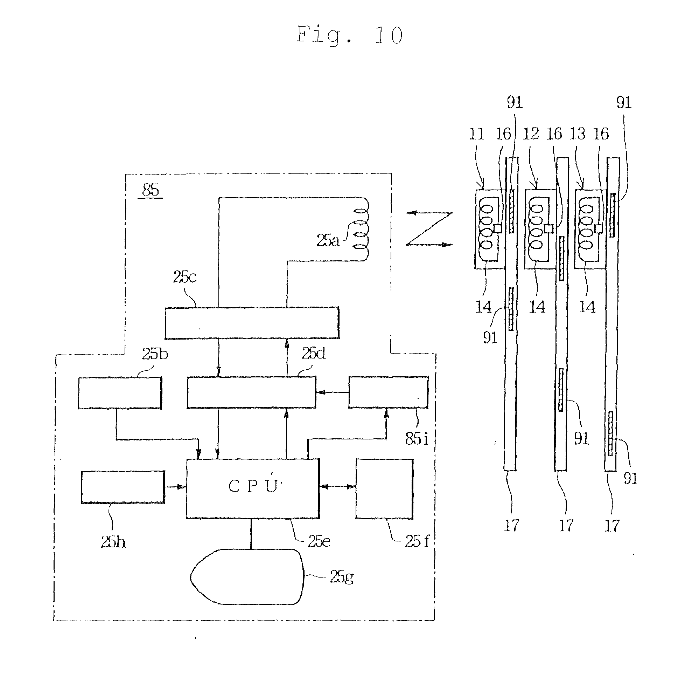

The Fig. 10 shows a fifth embodiment form of the present invention.

In Fig. 10, the same marks as Fig. 2 shows the same parts.

At the present embodiment form, the oscillation circuit 85i which enable the sweeping the radio wave oscillated from the above-mentioned transceiver antenna 25a within a predetermined frequency range is equipped in the interrogator 85 which oscillates a radio wave from the transceiver antenna 25a to the tags 11-13 in order to identify the tags 11-13.

A predetermined frequency range is a frequency range containing all of the resonance frequency of 1 or more tags 11-13, which respectively change by overlapping 1 or more tags 11-13 on 1 or more metal plates 91.

Moreover, coins (metal plates) other than bills are enclosed with the articles 17 to which tags 11-13 are respectively appended.

It comprises a composition except the above identically to the first embodiment form.

In addition, although the coin is exemplified as the metal plate, the aluminum foil or other metal plates appended to the articles such as the envelope are also available.

When 1 or more tags 11-13 and 1 or 2 or more coins 91 are overlapped, each tag 11-13 has the peculiar resonance frequency depends on the distance or the arrangement with other overlapped tags and the coins 91, thereby has different resonance frequency from the resonance frequency of the independent tags 11-13.

Moreover, even if the number of the tags with closed switches is one at a certain moment, the resonance frequency of a tag changes with existence of a coin 55.

Then, the frequencies of the alternative magnetic field (the carrier which carries the interrogation signal) which the interrogator 85 forms is changed so that all of the overlapped tags 11-13 may resonate.

That is, the oscillation circuit 85i sweeps oscillation frequency within the frequency range which contains the maximum and the minimum value of resonance frequency of overlapped two or more tags.

And sweeping the radio wave like the forth embodiment form, suspending the sweeping of the radio wave, reading the tag with the closed switch, writing a predetermined information in the tag, maintaining the switch of the identified tag to be opened, and resume the sweeping of the radio wave are operated.

Since each tag 11-13 with the closed switches is identified by repeating the operation one by one and the switches of the identified tags 11-13 are maintained at the state of being opened one by one, all the tags 11-13 can be identified.

In addition, in the present embodiment form, although the equipped tag with a switch is recommended, it also may be the equipped tag with a fuse shown in the third embodiment form.

In this case, the fuse of the tag is melted down after the identification of the tag.

### [Examples]

Following, examples of the present invention are explained in detail with a comparative example.

### <Example 1>

Although not illustrated, the switches which can open and close the resonance circuits are equipped in the resonance circuits which comprises the antenna coils and the RFID devices, and the 50 tags having the same resonance frequency are produced.

Only the switch of arbitrary tag is closed among these tags, and the switches of the other tags are opened.

In the state where these tags are overlapped, a radio wave of a predetermined frequency (the radio wave of the frequency in which the independent (not overlapped) tag resonates) is oscillated toward the tag from the interrogator.

Consequently, the interrogator can identify the above arbitrary tag.

Moreover, at this time, the maximum distance (the maximum distance between the transceiver antenna of the interrogator and the tag) in which the identification is possible is of the same extent with the maximum distance in case the tag exists independently.

### <Example 2>

As shown in Figs. 1 - 5, 50 sheets of the tag 11-13 in which the time constant circuits 27 are connected to the switches 26 through the switch controllers 28 are produced, by comprising the antenna coils 14 and the RFID devices 16, and having the switches 26 in the resonance circuits 24 where the resonance frequency is the same.

The switch 26 is "normally-on" FET, and the time constant of the time constant circuit 27 is set up so that it might change with each tag 11-13.

When these tags 11-13 are overlapped and the radio wave (the radio wave of the frequency in which the independent (not overlapped) tag resonates) is oscillated toward the tags 11-13 from the interrogator 25 in this state, all the tags 11-13 can be identified for a short time.

### <Example 3>

As shown in Fig. 8, 50 sheets of the tags 61 are produced, by comprising the antenna coils 14 and the RFID devices 16, and having the fuses 66 in the resonance circuits 24 where resonance frequency is the same.

Standard current by which the fuse 66 melts is 10mA.

These tags 61 are overlapped, in this state, the radio wave (the radio wave of the frequency in which the independent (not overlapped) tag resonates) is oscillated toward the tag 61 with changing the magnetic field intensity repeatedly from the interrogator as follows.

Magnetic field intensity is gradually enlarged by strengthening gradually intensity of the radio wave which the interrogator oscillates.

Thereby, the electromotive force of the antenna coils 14 of the tags 61 with the smallest amount of shifts from the resonance frequency of the independent tag, i.e., the pair of the outside of overlapped tag 61, become not less than the operating voltage of the RFID devices 16 of these tags 61.

At this time, the RFID device 16 of the above-mentioned tag 61 is operated and communicated with the interrogator and completed the communication, then the RFID device 16 passes large current (current exceeding 50mA) through resonance circuit 24 by it self in order to melt the fuse 66.

Then, when a signal from the communicating tag 61 stops, the interrogator reduces the magnetic field intensity.

Following, the magnetic field intensity is gradually enlarged again by strengthening gradually intensity of the radio wave which the interrogator oscillates.

Thereby, the electromotive force of the antenna coils 14 of the tags with the smallest amount of shifts from the resonance frequency of the independent tag, i.e., the pair of tags 61 which respectively adjoin the pair of the outside of overlapped tags 61 where the communication stopped, become not less than the operating voltage of the RFID devices 16 of these tags 61, since the resonance circuits 24 of the pair of the outside of overlapped tags 61 is opened.

At this time, the RFID device 16 of the tag 61 is operated and communicated with the interrogator and completed the communication, then the RFID device 16 passed large current (current exceeding 50mA) through resonance circuit 24 by it self in order to melt the fuse 66.

The all the tags 61 can be identified by repeating the above-mentioned operation.

### <Comparative example 1>

Although not illustrated, three sheets of tags having the same resonance frequency are produced the switch or the fuse like examples 1-3 is not prepared in the resonance circuit.

When these tags were overlapped and the radio wave (the radio wave of the frequency in which the independent (not overlapped) tag resonates) of predetermined frequency is oscillated toward the tag from the interrogator in this state, each tag cannot be identified at all.

In addition, even if the above-mentioned two or more overlapped tags are arranged to near the transceiver antenna of an interrogator, where the magnetic field intensity is strong, only a part of tags was can be identified.

### AVAILABILITY ON INDUSTRY

As mentioned above, according to the present invention, since it comprises that a normally closed switch which opens and closes a resonance circuit is equipped in the resonance circuit which comprises an antenna coil and RFID device, when current flowed in the resonance circuit, a time constant circuit which opens and closes the switch for every predetermined time is connected to the switch and opening time of the switch may further change with a time constant circuit of each tag.

Thus, when the radio wave which can resonate an independent tag is oscillated toward two or more overlapped tags, only the switch of one sheet of the tag among two or more tags may close at a certain moment, and the switches of other tags may open.

At this time, since the mutual inductance does not arise, one sheet of the tag with the closed switch resonate and the tag can be identified between one sheet of the tag with the closed switch and other tags with opened switches opened.

Consequently, all the overlapped tags can be identified one by one serially for a short time.

Moreover, if the switch controller comprises so that it is equipped between the switch and the time constant circuit, and the switch controller can change the state where the switch controller opens and closes the switch with a signal from the time constant circuit and the state where the switch opens regardless of the signal from the time constant circuit.

After identifying one sheet of the tag like the above-mentioned, the switch controller may maintain at the state where the switch of the identified tag is opened, regardless of a signal from the time constant circuit.

Consequently, since the un-identified tag whose switch opens and closes decreases gradually, it can identify each tag still certainly.

Moreover, it comprises so that the fuse is equipped in the resonance circuit which comprise the antenna coil and RFID device and the fuse may melt down when current beyond predetermined value flows in the resonance circuit.

Thus when the radio wave which can resonate on independent tag is oscillated toward the overlapped tag and intensity of the radio wave is strengthened gradually, the pair of the outside of overlapped tags where the amount of shifts from the resonance frequency of the independent tag is the smallest, is identified first.

After identification, in these tags, since the RFID devices themselves pass the current, which beyond predetermined value, through in the resonance circuits in order to melt the fuses, the resonance circuits may be opened.

Next, the pair of tags which respectively adjoin the above-mentioned tags are identified respectively, the fuses of these tags are melted like the above-mentioned procedure and the resonance circuit may be opened.

Thus, all the overlapped tags can be identified by changing the state where the resonance circuits of the identified tags are opened compulsorily, and the tags are identified sequentially from the outside of overlapped tags to inside of overlapped tags.

Moreover, if the oscillation circuit which is able to sweep the radio wave oscillated from the transceiver antenna within a predetermined frequency range, is prepared in the interrogator and a predetermined frequency range is defined a frequency range contains all of the resonance frequency of two or more pieces of the tags which respectively change with the arrangement of the tags, the tags with closed switches or the tags with not melting fuses, even if there is very much number of sheets of the overlapped tags, the oscillation circuit sweeps the oscillation frequency from the maximum to minimum value of resonance frequency of two or more tags with the closed switches or the tags with not melting fuses, all the overlapped tags can be identified one by one.

Furthermore, if a predetermined frequency range which the oscillation circuit of an interrogator sweeps is defined so that a frequency range contains all of the resonance frequency of 1 or more tags, which respectively change by overlapping with one or more tags and one or more metal plates, even if the tags and the metal plates are overlapped, all the overlapped tags can be identified.

Because the oscillation circuits sweep oscillation frequency within the frequency range from the maximum to minimum value, of the resonance frequency of the overlapped tags.

## Claims

1. System for identifying overlapped tags (11 to 13; 51 ; 61), the system comprising an interrogator (85) and a plurality of tags, each tag being appended to an article (1 7) and each having a resonance circuit (24) comprising an antenna coil (14; 54) and connected to the antenna coil a RFID device (16), wherein each resonance circuit (24) includes a switching element (26; 27; 66) for interrupting the connection between the RFID device (16) and the antenna coil (14; 54) if an electric current beyond a predetermined value flows in the resonance circuit (24), **characterized by** an interrogator (85) which oscillates a radio wave from a transceiver antenna (25 a) to tags (11 to 13; 61) and identifies the tags (11 to 13; 61), and an oscillation circuit (85i) which is able to sweep a radio wave oscillated from the transceiver antenna (25 a) within a predetermined frequency range, the predetermined frequency range being defined so that it includes all of the resonance frequencies of one or more tags (11 to 13; 61), which are, respectively, changed by overlapping one or more tags (11 to 13; 61) and one or more metal plates (91).

2. System as claimed in claim 1, **characterized in that** the switching element is a switch (24) and connected to the switch a time constant circuit (27) which opens and closes the switch for predetermined times, the opening time of the switches of the tags changes with each tag (11 to 13; 51; 61).

3. System as claimed in claim 1 or 2, **characterized in that** a switch controller (28) is provided in each resonance circuit (24) between the switch (26) and the time constant circuit (27) enabling to change the switch (26) into the state to open regardless of a signal from the time constant circuit (27) or into the state to open and close with a signal from the time constant circuit (27).

4. System as claimed in claim 1, **characterized in that** as switching element in each resonance circuit (24) a fuse (66) is provided which melts when electric current beyond a predetermined value flows in the resonance circuit (24).
